# EUROPEAN PATENT APPLICATION

(11) **EP 4 220 229 A1**
(43) Date of publication of application: **02.08.2023**
(21) Application number: 21870853.5
(22) Date of filing: 02.06.2021
(51) Int. Cl.: G01S 17/93, G01S 7/481

(54) **LASER RADAR**

(30) Priority: 25.09.2020 CN 202011024438; 25.09.2020 CN 202022144707 U
(71) Applicant: Hangzhou Ole-Systems Co., Ltd., Hangzhou, Zhejiang 310016 (CN)
(72) Inventor: ZHANG, Ou, Hangzhou, Zhejiang 310016 (CN); ZHU, Yaping, Hangzhou, Zhejiang 310016 (CN); DING, Ding, Hangzhou, Zhejiang 310016 (CN)
(74) Representative: Lambsdorff & Lange Patentanwälte Partnerschaft mbB
(86) International application number: PCT/CN2021/097803
(87) International publication number: WO 2022/062469

(57) **Abstract**

The present invention provides a laser radar, comprising: a emitting unit, a first receiving unit, the emitting unit is used to emit laser light, the light emitted by the emitting unit emits to a first target object, and is reflected on surface of the first target object, the first receiving unit is used to receive the light reflected from the first target object, the laser radar also comprises a light splitting unit and a second receiving unit; the light splitting unit is arranged in light emitting direction of the emitting unit, used for splitting the laser light emitted by the emitting unit into a first light and a second light which are at a preset angle, wherein, the first light emits to first target object in a first direction, and the second light emits to second target object in a second direction at the preset angle with the first direction; the second receiving unit is used to receive a second light reflected from the second target object. Adopting the above technical solution, the detection of target objects in different directions can be realized without adding light sources.

## Description

### TECHNICAL FIELD

The invention relates to the technical field of radar, in particular to a laser radar.

### BACKGROUND

In the prior art, the 2D laser scanning radar can obtain the distance information of each reflective target in a plane when it is working, so that the vehicle equipped with the radar can calculate the distribution of each object in the plane to help it avoid collisions during driving. Now there is a problem that in addition to the obstacles in the plane, there are some height "thresholds" in the work area, which may cause the upper end of the vehicle to collide with the obstacles. Therefore, it is necessary to give the 2D laser scanning radar an additional function to detect target objects in the height direction ahead, so as to help judge whether the highest point of the vehicle can pass through the front area. If it is implemented by adding a laser emitting unit and a laser receiving unit at the same time, it will obviously increase the complexity and cost of the system. Therefore, it is necessary to develop a laser radar with simple structure, low cost and the ability to detect target objects in additional directions.

### SUMMARY

In order to overcome the above-mentioned technical defects, the object of the present invention is to provide a laser radar with simple structure, low cost and capable of detecting target objects in additional directions.

The present invention discloses a laser radar, comprising: a emitting unit, a first receiving unit, the emitting unit is used to emit laser light, the light emitted by the emitting unit emits to a first target object, and is reflected on surface of the first target object, the first receiving unit is used to receive the light reflected from the first target object,
characterized in that
the laser radar also comprises a light splitting unit and a second receiving unit;
the light splitting unit is arranged in light emitting direction of the emitting unit, used for splitting the laser light emitted by the emitting unit into a first light and a second light which are at a preset angle, wherein, the first light emits to first target object in a first direction, and the second light emits to second target object in a second direction at the preset angle with the first direction;
the second receiving unit is used to receive a second light reflected from the second target object.

Preferably, the second receiving unit is arranged in a coaxial direction of the second direction.

Preferably, the laser radar also comprises a processing unit, the processing unit is connected to the emitting unit, the first receiving unit and the second receiving unit, the processing unit is used to calculate a first distance between the laser radar and the first target object and a second distance between the laser radar and the second target according to laser light received by the first receiving unit and the second receiving unit;
the processing unit is used to calculate height of the second target object relative to the laser radar according to the second distance and the preset angle.

Preferably, the light splitting unit is a light splitting prism.

Preferably, the light splitting prism is formed by combining two triangular prisms.

Preferably, The light splitting unit comprises a semi-transparent and semi-reflective mirror and a reflecting mirror;
the semi-transparent and semi-reflective mirror is used to split the laser light emitted by the emitting unit into first light and second light that are perpendicular to each other, and the reflecting mirror is used to reflect the second light, so that the reflected second light and the first light are at the preset angle.

Preferably, the light splitting unit comprises a light barrier and a reflecting mirror group;
the light barrier is used to split the laser light emitted by the emitting unit into first light and second light that are parallel to each other, and the reflecting mirror group is used to reflect the second light, so that the reflected second light and the first light are at the preset angle.

Preferably, the emitting unit comprises a laser diode and an emitting objective, the emitting objective is used to collimate light emitted by the laser diode;
the first receiving unit comprises a first receiving objective and a first avalanche photodiode, and the first receiving objective is used to converge light reflected from the first target object to the first avalanche photodiode;
the second receiving unit comprises a second receiving objective and a second avalanche photodiode, and the second receiving objective is used to converge light reflected from the second target object to the second avalanche photodiode. Preferably, the preset angle is greater than 0 degrees and less than 45 degrees.

Preferably, the laser radar also comprises a rotating unit, which is used to drive the emitting unit, the light splitting unit, the first receiving unit and the second receiving unit to rotate in a circumferential direction.

Adopting the above technical solution, compared with the prior art, the beneficial effect is that the light emitted by the emitting unit is used to be split, so that the light emitted by one emitting unit can detect target objects in two directions, without extra emitting units are added, which reduces the complexity of the system, and reduces the cost of the device.

### BRIEF DESCRIPTION OF THE DRAWINGS

Fig. 1 is the schematic diagram of laser radar and its optical path of the present invention;
Fig. 2 is the schematic diagram of the structure and optical path of laser radar in a specific embodiment;
Fig. 3 is the structural schematic diagram of the light splitting prism in Fig. 2.

### Reference numerals:

110-laser diode, 120-transmitting objective , 210-the first avalanche photodiode, 220-the first receiving objective , 300 light splitting prism, 310, 320-triangular prism, 410-the second avalanche photodiode, 420-the second receiving objective .

### DETAILED DESCRIPTION

The advantages of the present invention will be further described below in conjunction with the drawings and specific embodiments.

An exemplary embodiment will be described in detail here, and an example thereof is shown in the drawings. When the following description relates to the drawings, unless otherwise indicated, the same numbers in different drawings represent the same or similar elements. The implementation ways described in the following exemplary embodiments do not represent all implementation ways consistent with the present disclosure. On the contrary, they are only examples of devices and methods consistent with some aspects of the present disclosure as detailed in the appended claims.

The terms used in the present disclosure are only for the purpose of describing specific embodiments and are not intended to limit the present disclosure. The singular forms of "one", "the" and "this" used in the present disclosure and the appended claims are also intended to include the majority forms, unless the context clearly indicates other meanings. It should also be understood that the term "and/or" used herein refers to and includes any or all possible combinations of one or more associated listed items.

It should be understood that although the terms first, second, third, etc. may be used to describe various information in the present disclosure, such information should not be limited to these terms. These terms are only used to distinguish the same type of information from each other. For example, without departing from the scope of the present disclosure, the first information can also be called the second information, and similarly, the second information can also be called the first information. Depending on the context, the word "if" used here can be interpreted as "when" or "while" or "in response to determination".

In the description of the invention, it is necessary to understand that the orientation or position relationship indicated by the terms "longitudinal", "horizontal", "up", "down", "front", "back", "left", "right", "vertical", "horizontal", "top", "bottom", "inside", "outside", etc. is based on the orientation or position relationship shown in the drawings, only for the convenience of describing the invention and simplifying the description, rather than indicating or implying that the device or element referred to must have a specific orientation, be constructed and operated in a specific orientation, so it cannot be understood as a limitation of the present invention.

In the description of the present invention, unless otherwise specified and limited, it should be noted that the terms "mount", "attach", "connect" should be understood in a broad sense, for example, it can be a mechanical connection or an electrical connection, or it can be the internal communication of two elements, it can be a direct connection, or an indirect connection through an intermediary. Those ordinary skilled in the art can understand the specific meaning of the above terms according to the specific situation.

In the following description, use of suffixes such as "module" , "part" or "unit" for denoting elements is only for facilitating description of the present invention and has no specific meaning by itself. Therefore, "module" and "part" can be mixed.

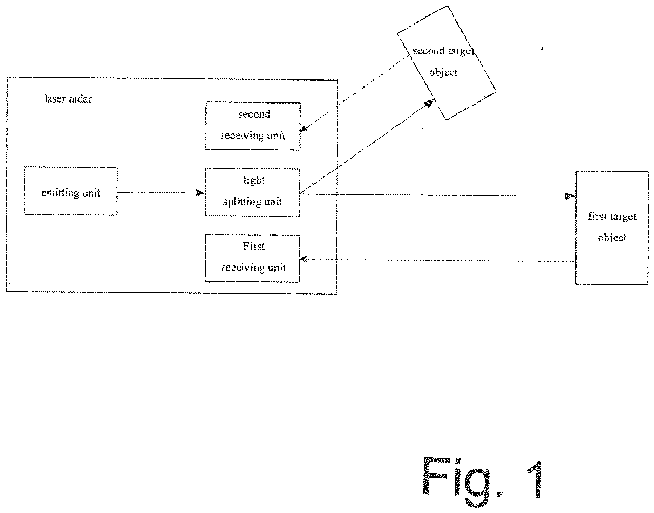

Refer to Figure 1-3, the invention provides a laser radar, which comprises:
- Emitting unit

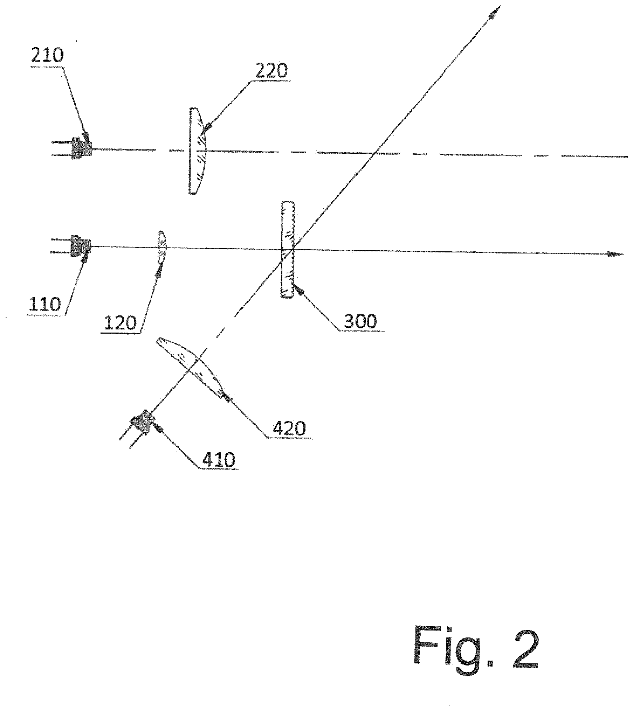

The emitting unit is used to emit laser light. Specifically, refer to Figure 2, the emitting unit comprises a laser diode 110 and an emitting objective 120, the emitting objective 120 is used to collimate the laser light generated by the laser diode 110. The emitting objective 120 is preferably a convex.

### - Light splitting unit

The light splitting unit is arranged in light emitting direction of the emitting unit, used for splitting the laser light emitted by the emitting unit into a first light and a second light which are at a preset angle, wherein, the first light emits to first target object in a first direction, and the second light emits to second target object in a second direction at the preset angle with the first direction. The first target object and the second target object can be independent objects in different directions, or can be different parts of the whole object. Preferably, the preset angle is greater than 0 degrees and less than 45 degrees.

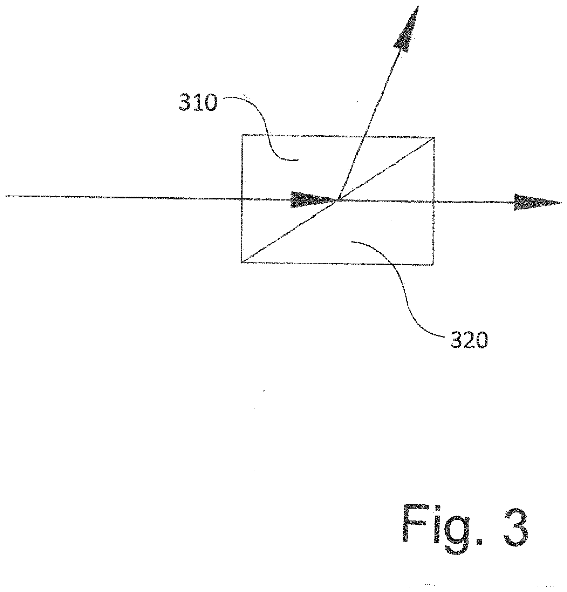

Refer to Figure 2, in this embodiment, the light splitting unit also comprises a light splitting prism 300, which can split the incident laser light into two lights of arbitrary angles by changing the angle of the prism. Refer to Figure 3, the light splitting prism 300 can be formed by combining two triangular prisms 310, 320.

In some embodiments, the light splitting unit comprises a semi-transparent and semi-reflective mirror and a reflecting mirror. The semi-transparent and semi-reflective mirror is used to split the laser light emitted by the emitting unit into first light and second light that are perpendicular to each other, and the reflecting mirror is used to reflect the second light, so that the reflected second light and the first light are at the preset angle. The reflecting mirror can be a plane reflecting mirror, or can be a reflecting prism, those skilled in the art may flexibly set them as required.

In some embodiments, the light splitting unit comprises a light barrier and a reflecting mirror group. The light barrier is a light-shielding part with two light-transmitting holes, used to split the laser light emitted by the emitting unit into first light and second light that are parallel to each other, and the reflecting mirror group is used to reflect the second light, so that the reflected second light and the first light are at the preset angle. The reflecting mirror group can be composed of two reflecting mirrors with a certain angle.

### -First receiving unit

The first receiving unit is used to receive the first light reflected from the first target object. Referring to FIG. 2, in this embodiment, the first receiving unit includes a first receiving objective 220 and a first avalanche photodiode 210 (APD), the first receiving objective 220 is used to receive the first light reflected by the object converges to the first avalanche photodiode 210. The first receiving objective 220 is preferably a convex. The first avalanche photodiode 210 may be a single avalanche photodiode, or may be an array of avalanche photodiodes, specifically, those skilled in the art may flexibly set them as required.

### -Second receiving unit

The second receiving unit is used to receive the second light reflected from the second target object. Preferably, the second receiving unit is arranged coaxially with the second light emitted from the light splitting unit to achieve better receiving effect. Referring to FIG. 2, in this embodiment, the second receiving unit includes a second receiving objective 420 and a second avalanche photodiode 410, and the second receiving objective 420 is used to converge the second light reflected from the second target object to the second avalanche photodiode 410. The second receiving objective 420 is preferably a convex. The second avalanche photodiode 410 may be a single avalanche photodiode, or may be an array of avalanche photodiodes, specifically, those skilled in the art may flexibly set them as required.

Preferably, the laser radar also comprises;
- Rotating unit

The rotating unit is used to drive the emitting unit, the light splitting unit, the first receiving unit and the second receiving unit to rotate in a circumferential direction, so as to realize the detection of circumferential target objects. The rotating unit may include a rotating motor and a supporting base, the rotating motor drives the supporting base to rotate directly or through a transmission structure, and the emitting unit, the light splitting unit, the first receiving unit and the second receiving unit are fixedly arranged on the supporting base.

### - Processing unit

The processing unit is connected to the emitting unit, the first receiving unit and the second receiving unit, the processing unit is used to calculate a first distance between the laser radar and the first target object and a second distance between the laser radar and the second target according to laser light received by the first receiving unit and the second receiving unit. The first distance and the second distance can be determined according to the time of laser emitting and receiving and the location of each unit in the radar, which are common knowledge in the art and will not be repeated here. Preferably, used to calculate height of the second target object relative to the laser radar according to the second distance and the preset angle, the height here can be understood as, taking a plane where the first light and the second light are located as a vertical plane, and according to the second distance between the laser radar and the second target object and preset angle, the vertical height of the second target object relative to the first light can be calculated. The processing unit is preferably a single-chip microcomputer.

In some embodiments, the radar can also be provided with a transmission unit, which is connected with the emitting unit, the first receiving unit and the second receiving unit, and transmits the emitted and received information to an external terminal by wired or wireless means performing calculation processing.

The laser radar of the present invention, preferably, can be used on a vehicle, such as an AVG trolley, to detect objects in the forward direction of the trolley through the first light, and to detect objects in the height direction in front of the trolley through the second light, so as to analyze whether the obstacle at an upper end in front of the car (generally a structure similar to a door frame) is lower than the height of the car, and then judge whether the car can pass safely.

It should be noted that the embodiments of the present invention have better implementability and are not intended to limit the present invention in any form. Any person skilled in the art may use the technical content disclosed above to change or modify equivalent effective embodiments. However, any amendments or equivalent changes and modifications made to the above embodiments according to the technical essence of the present invention without departing from the content of the technical solution of the present invention still belong to the scope of the technical solution of the present invention.

## Claims

1. A laser radar, comprising: a emitting unit, a first receiving unit, the emitting unit is used to emit laser light, the light emitted by the emitting unit emits to a first target object, and is reflected on surface of the first target object, the first receiving unit is used to receive the light reflected from the first target object,
**characterized in that**
the laser radar also comprises a light splitting unit and a second receiving unit;
the light splitting unit is arranged in light emitting direction of the emitting unit, used for splitting the laser light emitted by the emitting unit into a first light and a second light which are at a preset angle, wherein, the first light emits to first target object in a first direction, and the second light emits to second target object in a second direction at the preset angle with the first direction;
the second receiving unit is used to receive a second light reflected from the second target object.

2. The laser radar according to claim 1, **characterized in that**,
the second receiving unit is arranged in a coaxial direction of the second direction.

3. The laser radar according to claim 1 or 2, **characterized in that**,
the laser radar also comprises a processing unit, the processing unit is connected to the emitting unit, the first receiving unit and the second receiving unit, the processing unit is used to calculate a first distance between the laser radar and the first target object and a second distance between the laser radar and the second target according to laser light received by the first receiving unit and the second receiving unit;
the processing unit is used to calculate height of the second target object relative to the laser radar according to the second distance and the preset angle.

4. The laser radar according to any one of the preceding claims, **characterized in that**
the light splitting unit is a light splitting prism.

5. The laser radar according to claim 4, **characterized in that**,
the light splitting prism is formed by combining two triangular prisms.

6. The laser radar according to any one of the preceding claims, **characterized in that**
the light splitting unit comprises a semi-transparent and semi-reflective mirror and a reflecting mirror;
the semi-transparent and semi-reflective mirror is used to split the laser light emitted by the emitting unit into first light and second light that are perpendicular to each other, and the reflecting mirror is used to reflect the second light, so that the reflected second light and the first light are at the preset angle.

7. The laser radar according to any one of the preceding claims, **characterized in that**
the light splitting unit comprises a light barrier and a reflecting mirror group;
the light barrier is used to split the laser light emitted by the emitting unit into first light and second light that are parallel to each other, and the reflecting mirror group is used to reflect the second light, so that the reflected second light and the first light are at the preset angle.

8. The laser radar according to any one of the preceding claims, **characterized in that**
the emitting unit comprises a laser diode and an emitting objective, the emitting objective is used to collimate light emitted by the laser diode;
the first receiving unit comprises a first receiving objective and a first avalanche photodiode, and the first receiving objective is used to converge light reflected from the first target object to the first avalanche photodiode;
the second receiving unit comprises a second receiving objective and a second avalanche photodiode, and the second receiving objective is used to converge light reflected from the second target object to the second avalanche photodiode.

9. The laser radar according to claim 1, **characterized in that**
the preset angle is greater than 0 degrees and less than 45 degrees.

10. The laser radar according to any one of the preceding claims **characterized in that**
the laser radar also comprises a rotating unit, which is used to drive the emitting unit, the light splitting unit, the first receiving unit and the second receiving unit to rotate in a circumferential direction.
